# EUROPEAN PATENT SPECIFICATION

(11) **EP 0 546 642 B1**
(45) Date of publication and mention of the grant of the patent: **23.08.1995**
(21) Application number: 92203872.4
(22) Date of filing: 10.12.1992
(51) Int. Cl.: H02G 3/14, H02G 3/08

(54) **Snap connection system for detachably connecting parts of a unit, in particular for use with electrical installation boxes**
Rastverbindungssystem für das losbare Verbinden von Teilen einer Einheit, insbesondere für elektrische Installationsdosen
Système de connexion à encliquetage pour connecter temporairement les parties d'une unité, en particulier adapté aux boîtiers d'installation électrique

(30) Priority: 10.12.1991 NL 9102058
(43) Date of publication of application: 16.06.1993
(73) Proprietor: HOLEC SYSTEMEN EN COMPONENTEN B.V., NL-7555 CS Hengelo (NL)
(72) Inventor: Morssink, Wim, NL-7553 KE Hengelo (NL); Tannhardja, Mike Mulyana, NL-7552 VP Hengelo (NL); Kippers, Mannes, NL-7642 VK Wierden (NL)
(74) Representative: de Bruijn, Leendert C.

(56) References cited:
- EP-A- 0 293 035
- DE-U- 8 020 040
- FR-A- 2 609 354

## Description

The invention relates to a snap connection system for detachably connecting parts of a unit, in particular for detachably fixing a plastic cover on a plastic body for use in electrical installations, comprising an elongated latching hook which is resilient in one direction and is fixed to a first part of the unit to be connected, an unlatching hook which is resilient in one direction, and a latching lug, said unlatching hook and latching lug are both fixed to a second part of the unit to be connected, the latching hook and the latching lug being in a locking engagement when the parts of the unit are connected, and said locking engagement can be unlocked and the latching hook brought into engagement with the unlatching hook by moving the latching hook counter to its resilient direction of movement, in which unlocked state the latching hook and the unlatching hook engage until the parts of the unit are detached.

Such a snap connection system is known from European Patent Application 293,035.

In the case of this known connection system, which is used for detachably fixing the cover on the body of a distribution box for use in electrical installations, when the cover is placed on the body the latching hook fixed to the cover is moved in such a way counter to its resilient direction of movement that, viewed in the direction of connection of the cover and the body, it can go past the latching lug. When the latching hook subsequently springs back, it goes into a locking engagement with the latching lug, in which case the cover is held against the body. The unlatching hook, which is resilient in the direction of fixing of the cover and the body is placed on the bottom of the body. Moving the latching hook out of the locking position counter to its resilient direction, for example using a screwdriver, causes the unlatching hook also to be moved counter to its resilient direction by means of the latching hook. If the latching hook is now moved far enough, the unlatching hook can spring back again and engage on the end face at the free end of the latching hook. This means that the latching hook is prevented from springing back in the direction of the latching lug by the engagement of the unlatching hook on the latching hook. The cover can then be removed from the body without the risk of the latching hook engaging again with the latching lug.

Evaluation of this snap connection system has brought a number of disadvantages to light.

A major disadvantage lies in the relative arrangement of the latching hook, latching lug and unlatching hook. The positioning of the unlatching hook on the bottom of the body, in such a way that it can engage on the end face of the free end of the latching hook, introduces a requirement concerning the length of the latching hook. For, if the latching hook is too long, there is a risk of it projecting too far past the unlatching hook when in the locking position, with the result that the latching hook cannot be moved during unlocking, because the unlatching hook then acts as a barrier. If the latching hook is too short, no engagement between the latching hook and the unlatching hook will be possible, or there is a risk of the latching hook and the latching lug still being able to engage during removal of the cover, which makes removal of the cover difficult. These problems can also arise from tolerances in the dimensions of the cover and the body, which are made by, for example, injection-moulding of plastic, and in the case of tolerances in the position of the latching lug.

Due to the fact that the unlatching hook has to have a certain length for making it resilient, placing it on the bottom of the body takes up a relatively large amount of space, which space in, for example, a distribution box for electrical installations cannot be used for setting up safety equipment or signalling devices. This is all the more a disadvantage in the light of efforts to reduce the dimensions of electrical distribution boxes or to increase their capacity utilisation.

Particularly in the case of deep covers, positioning of the latching lug and the unlatching hook on the bottom of the body to which the cover has to be connected requires relatively long latching hooks. Such long latching hooks are very prone to damaging, for example when the cover falls to the ground. This is even more the case when the body also has a certain depth, such that the latching hook has to extend outwardly from the cover.

The object of the invention is to eliminate the abovementioned disadvantages and to provide a snap connection system for detachably connecting parts of a unit which can produce a connection of the kind described above, which is less sensitive to tolerance differences and damaging, and permits greater design freedom than the known snap connection.

This object is achieved according to the invention through the fact that the engaging parts of the latching lug, the unlatching hook and the latching hook are disposed near the connecting interface of the first and second part of the unit to be connected, wherein the unlatching hook is disposed in such a way that it can engage on the latching hook near its longitudinal edge.

Through positioning of the engaging elements of the snap connection system, i.e. the latching hook, the latching lug and the unlatching hook, such that they can be brought into engagement near the connecting interface of the parts of the unit to be connected, for example a cover and body of an electrical distribution box, no space on the bottom of the body has to be occupied. This, of course, is in favour of increasing the degree of capacity utilization of the unit.

Further, especially in the case of units having relatively deep first and second parts to be connected, in the system according to the invention, the latching hook has not to extend outside the first part of the unit over a length equal to the depth of the second part of the unit, as is the case in the known snap connection system, in which the latching lug and the unlatching hook are positioned at the bottom of the second part. Accordingly, the risk of damaging the latching hook in the system according to the invention is effectively reduced, compared to the state of the art.

Through positioning the unlatching hook in such a way according to the invention that it can engage on the latching hook near the longitudinal edge thereof, a considerably less tolerance-sensitive snap connection system compared with the known embodiment is obtained. Length differences in the latching hook, as a result of tolerances in the hook itself or the parts to be connected, have no adverse effect as regards making the latching hook and unlatching hook engage with each other. The engagement of the latching hook and the latching lug can also be optimised without having to take the unlatching hook into account. This produces great freedom in the design of the snap connection system, which makes it easy to adapt to the shape of the parts of a unit to be connected, for example the shape of the cover and the body of an electrical distribution box.

In the preferred embodiment of the snap connection system according to the invention, in order to improve the mechanical strength, an unlatching hook is disposed at each side of the latching lug, for engagement on the respective longitudinal edge of the latching hook.

As mentioned above, the unlatching hook has to have a certain length for making it resilient. In an embodiment of the snap connection system according to the invention which is advantageous as regards the space required for it, each unlatching hook extends in a direction essentially parallel to the latching hook. With this arrangement a very compact snap connection system is achieved due to the absence of mutually transversally arranged elongated latching and unlatching hooks. It will be clear that when this embodiment is used in, for example, an electrical distribution box, the useful available space in the box with the snap connection system according to the invention is greater than in a box of the same dimensions provided with the known snap connection system. In a preferred embodiment of the system according to the invention, the latching hook and each unlatching hook extend parallel to the connecting direction of the two parts of the unit to be connected.

An embodiment of the snap connection system according to the invention which is suitable for the use of resilient latching hooks made of plastic is that in which the latching hook is lip-shaped having one end fixed to the first part of the unit and a free end provided with an elevation which slopes towards the fixed end of the latching hook and passes into a stop spaced apart from the face of the latching hook for engagement on the latching lug.

By having the stop of the latching hook spaced from its face, a valley is formed between the face of the latching hook and the sloping elevation for receiving a tool, such as a screwdriver, for moving the latching hook to its unlocked position, i.e. into engagement with the unlatching hook or hooks. The valley between the elevation and the body of the latching hook forms a safety barrier to prevent the tool from penetrating too far into the box or another part of the unit to be connected. Damaging of the engagement face of the latching hook on the latching lug, which is a real danger, for example, in the case of the known snap connection system is also effectively prevented. Damaging of the engagement face of the stop of the latching hook on the latching lug may result in a loose connection of the two parts of the unit to be connected, or even worse in that no locking connection is possible anymore.

In a further simple, embodiment of the system according to the invention, the free end of the lip-shaped latching hook is bent over backwards in the direction of the fixed end thereof and forms the elevation for engagement on the latching lug.

In the space-saving arrangement in which the unlatching hook(s) is (are) disposed parallel to the latching hook, the latching hook can be extended in a lip shape near its free end, for engagement of one or more unlatching hooks, and thereby enhancing the design freedom.

In a further embodiment of the snap connection system according to the invention, in particular for use with a lip-shaped latching hook, each unlatching hook is formed as a lip-shaped sidepiece which extends with its plane transverse to the plane of the latching hook, which sidepiece is provided with an elevation which slopes in the unlocking direction of the latching hook, and which passes into a stop for engagement on the free end of the latching hook, for holding the latching hook at a distance from the latching lug until the two parts of the unit are detached. In order to improve the resilient action, the lip-shaped sidepieces according to a yet further embodiment of the invention can be provided with a free end which is bent over backwards.

In these embodiments the latching hook, the latching lug and the unlatching hook(s) can be formed during the production of the respective parts of a unit, for example by injection moulding or any other suitable process for manufacturing from thermoplastic material parts which are to be detachably connected, such as a cover and housing or box for electrical applications.

Preferably, the latching lug and/or each unlatching hook are/is disposed inside a tubular element fixed to the second part of the unit, whereas the latching hook may be disposed in a tubular element fixed to the first part of the unit. These tubular elements can be integrally formed during production of the unit and provide a duct for guiding a tool for unlocking the snap connection, prevent making undesired contact with electrical parts and/or conductors inside the unit such as, for example in, an electrical distribution box, and act as a protective sheating preventing damaging of the parts of the snap connection system. For inserting the tool one or both of the tubular elements of a particular snap connection may be provided with a suitable recess for receiving the tool.

In yet another embodiment of the invention the unlatching hook is formed by a boundary edge of a recess for accommodating the latching hook, which recess forms part of the second part of the unit. This embodiment is advantageous because the recess concerned can easily be provided in, for example, a partition wall in a box or body if the latching hook is fixed to the cover. Conversely, such a recess can easily be provided in the cover if the latching hook is mounted in the box or the body. In the embodiment with recess an edge of the recess can also advantageously act as a latching lug.

In a preferred embodiment of the invention, the recess for receiving the latching hook is formed in an end face of a tubular element fixed to the second part of the unit. With this embodiment (outwardly) extending hooks or lugs, which are prone to damaging, are effectively eliminated.

It will be clear from the above that the invention permits great freedom in the design and positioning of the parts of the snap connection system, so that said system can be adapted to and modelled on a specific application in the optimum manner.

In a further embodiment of the invention, which is advantageously in connection with accommodating tolerances in, for example, the dimensions of the parts of a unit to be connected, for example the side walls of a box, in order to hold these parts against each other in a mechanically sturdy manner, the latching hook is disposed such that in its resilient direction of movement the part thereof for engagement with the latching lug can make an arc-shaped movement, the latching lug being disposed such that in the locked position the latching hook engages the latching lug at a point on said arc beyond the point at which the engaging part of the latching hook extends furthest.

This embodiment provides a mechanically sturdy connection, because the latching hook, in its tendency to travel along said arc, exerts a tractive force on the two parts of the unit to be connected which produces a locking engagement under a certain mechanical stress.

In yet another embodiment of the snap connection system according to the invention the latching hook is disposed slanting over a distance relative to the connecting direction of the two parts of the unit. This ensures that the latching hook engages on the latching lug to a certain extent counter to its resilient direction of movement.

The latching part of the latching lug can also be positioned slanting towards the latching hook and made slightly resilient, so that in combination with the resilient action of the latching hook it can accommodate in an optimum way tolerance differences in the dimensions of the parts of the snap connection system itself and of the parts to be connected. A major advantage here is that the parts to be connected can always be held firmly against each other, which improves the mechanical strength of the seal. This contrasts with parts which, owing to tolerance differences or the like, are held slightly loosely, rattling, relative to each other.

The slanting arrangement of the latching hook, and preferably also of the latching lug, provides a snap connection system which is particularly suitable for use in connecting parts of a unit with a seal or packing lying between them in the form of, for example, a rubber O-ring, a sealing strip or the like. The snap connection system according to the invention in this case provides sufficient mechanical pressure for producing a desired long-life seal.

The invention also relates to a housing provided with a plastic cover and a plastic body, intended in particular for use as a distribution box for an electrical installation for the accommodation of safety and signalling equipment, and provided with a snap connection system such as that described above, in which the body is provided with one or more latching hooks, and in which the cover is provided with one or more corresponding latching lugs and unlatching hooks and recesses formed in the cover for moving the latching hooks from the outside of the cover to unlock the connection of the cover and the body.

Such distribution boxes are generally rectangular in shape, and the snap connection system according to the invention, due to its relatively small dimensions, can be fitted near each corner point of the body or the cover, without inadmissible loss of useful space in the box for setting up the abovementioned safety and signalling equipment.

This contrasts with the known snap connection system in which, as a result of the necessary dimensions of the unlatching hook, a relatively large amount of space is taken up on the bottom of the box, and in practice a snap connection is therefore fitted only at the level of the middle of the box near two opposite side walls. This is because otherwise too much space in the box is lost. It will be clear that providing a snap connection system at all corner points is also advantageous for obtaining a desired mechanically sturdy seal between the cover and the body or in general the parts of a unit to be connected.

The invention is explained below with reference to the drawing, in which, by way of example, a number of embodiments of the snap connection system according to the invention are shown diagrammatically and their application in a distribution box for an electrical installation is illustrated.

Figures 1a, 1b and 1c show diagrammatically in perspective a embodiment of the snap connection system according to the invention, in the detached, locked and unlocked positions, respectively.

Figure 2 shows diagrammatically in perspective a variant of the embodiment of the snap connection system according to the invention shown in Figure 1, in the detached position.

Figure 3 shows diagrammatically in perspective a further embodiment of the snap connection system according to the invention.

Figures 4a, 4b and 4c show partially in cross-section and in elevation an embodiment of the snap connection system according to the invention based on Figure 1, fixed to parts which can be detachably connected.

Figure 5 shows diagrammatically in perspective yet another embodiment of the snap connection system according to the invention.

Figures 6a and 6b illustrate diagrammatically, partially in cross-section and in perspective, the main difference between the known snap connection system (Figure 6a) and an embodiment of the principle of the snap connection system according to the invention (Figure 6b).

Figure 7 shows diagrammatically in perspective the application of the snap connection system according to the invention in an electrical distribution box.

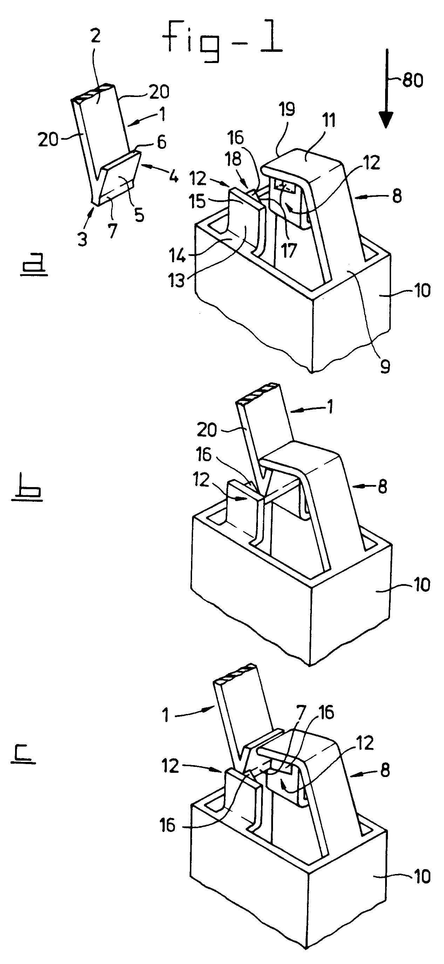

The snap connection system according to the invention shown in Figure 1 is produced from thermoplastic material by injection-moulding. This embodiment comprises an elongated, lip-shaped latching hook 1 of which the end 2 is fixed to a part of a unit to be connected (not shown). Near its free end 3 the latching hook 1 is provided with an elevation 4, with a side 5 sloping in the direction of the fixed end 2, and a stop 6. The free end 3 ends in an extension 7. The lip-shaped latching hook 1 is resilient in the direction transverse to the plane thereof.

Reference number 8 indicates a latching lug which is also lip-shaped, and is fixed by one end 9 to another part (not shown) of the unit to be detachably connected, for example at the end of a tubular element 10. The latching lug 8 has a free end 11 for engagement on the elevation 4 of the latching hook 1.

Disposed on both sides of the latching lug 8, at the level of the free end 11 thereof, are two unlatching hooks 12, each in the form of a lip-shaped sidepiece 13, which is firmly fixed by one end 14 to the tubular element 10 and has a free end 15 near which an elevation 16 is formed. Said elevation 16 has a side 17 which slopes in the direction away from the free end 11 of the latching lug 8, and which ends in a stop 18, transverse to the sidepiece 13. The two elevations 16 of the unlatching hooks 12 are positioned opposite each other. The lip-shaped unlatching hooks 12 are resilient in the direction transverse to the plane thereof.

The arrow 80 indicates the connecting direction in which the two parts of the unit to be connected are fastened to each other when the snap connection system is being locked.

When the snap connection system is being locked from the detached position shown in Figure 1a, the free end 3 of the latching hook 1 slides along the end face 19 of the latching lug 8, in which case the latching hook 1 is moved counter to its resilient direction of movement. Moving the latching hook 1 further in the direction of the arrow 80 will cause the stop 6 to go past the end face 19 of the latching lug 8, as a result of which the latching hook 1 springs back in its resilient direction of movement, and the stop 6 engages on the free end 11 of the latching lug 8, as shown in Figure 1b. The latching hook 1 in this locked position lies between the unlatching hooks 12, approximately where the distance between the elevations 16 is greatest.

Bending the latching hook 1 counter to its resilient direction of movement away from the latching lug 8, for example using a tool such as a screwdriver, will cause the latching hook 1 to slide with its narrow sides along the ascending sides 17 of the elevations 16 of the unlatching hooks 12, with the result that said unlatching hooks 12 are bent slightly away from each other counter to their resilient direction of movement. When the latching hook 1 goes with its extension 7 past the stops 18 of the unlatching hooks 12, the unlatching hooks 12 can spring back in their resilient direction of movement, and the extension 7 engages with the parts lying near the longitudinal edges 20 of the latching hook 1 on the two stops 18. This prevents the latching hook 1 from being able to engage again with the latching lug 8, as shown in Figure 1c.

From this unlocked position, the latching hook 1, or the part of the unit connected thereto, can easily be detached counter to the direction of the arrow 80.

As can best seen in fig. 1b, the latching hook 1 and the unlatching hooks 12 as well as the latching lug 8 extend essentially parallel to each other in the connecting direction 80 of the parts of the unit to be connected, providing a very space saving arrangement.

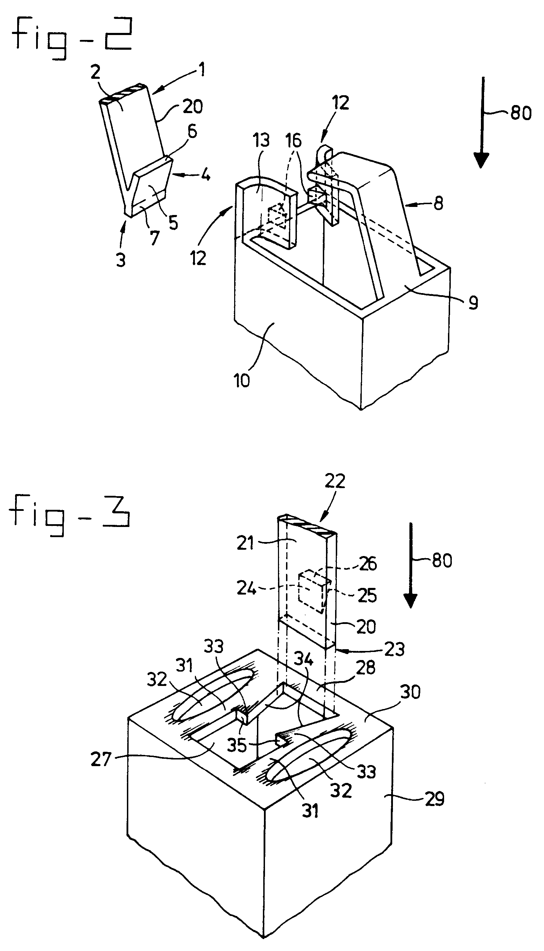

Figure 2 shows a variant of the embodiment shown in Figure 1, in which the lip-shaped sidepieces 13 of the unlatching hooks 12 extend transversely to the connecting direction 80, or transversely to the body of the lip-shaped latching lug 8. As regards functioning, this embodiment corresponds to the embodiment shown in Figure 1. Although the sidepieces 13 are shown fixed to the tubular element 10, they can, of course, also extend from a side wall of, for example, an installation box in which the snap connection system is being used, or from the fixed end 9 of the latching lug 8.

Figure 3 shows a further embodiment of the snap connection system according to the invention, provided with a lip-shaped latching hook 21 with a fixed end 22 and a free end 23, and an elevation 24 provided with a side 25 which slants upwards in the direction of the fixed end 22 and which ends in a stop 26 transverse to the plane of the latching hook 21. The latching hook 21 is resilient in the direction transverse to the plane thereof.

The latching lug is formed by a boundary edge 28 of a recess 27, for example in an end face 30 of a tubular element 29 forming part of a part of the unit to be connected. The unlatching hooks are formed by two boundary edges 31 of the recess 27 connecting to the boundary edge 28. Further recesses 32 are provided on either side of these boundary edges 31, in order to ensure that the boundary edges 31 can be bent away sideways. The further recesses 32 are preferably circular or elliptical. Both boundary edges 31, forming the unlatching hooks, are provided with elevations 33 which point towards each other and have a side 34 which slopes away from the boundary edge 28 forming the latching lug and ends in a stop 35, essentially at right angles to the boundary edge 31.

Figure 3 shows the snap connection system in the detached state. The stop 26 can be brought into engagement with the boundary edge 28 by moving the latching hook 21 in the direction of the arrow 80. From this locking position the latching hook 21 can be moved counter to its resilient direction of movement, in the same way as that described with reference to Figure 1c, past the stops 35, during which operation the boundary edges 31 deflect in the direction of the further recesses 32. Through engagement of the stops 35 on the parts of the face of the lip-shaped latching hook 21 lying near the respective longitudinal edges 20, for example on either side of the elevation 24, the latching hook 21 is prevented from moving again into a locking engagement with the boundary edge 28. From this unlocked position the latching hook 21 can then easily be moved in the opposite direction to the direction of the arrow 80. Instead of on the end of a tubular element 29, the latching lug 28 and unlatching hooks 31 can also be formed, for example, in a wall of a part of the unit to be connected (not shown).

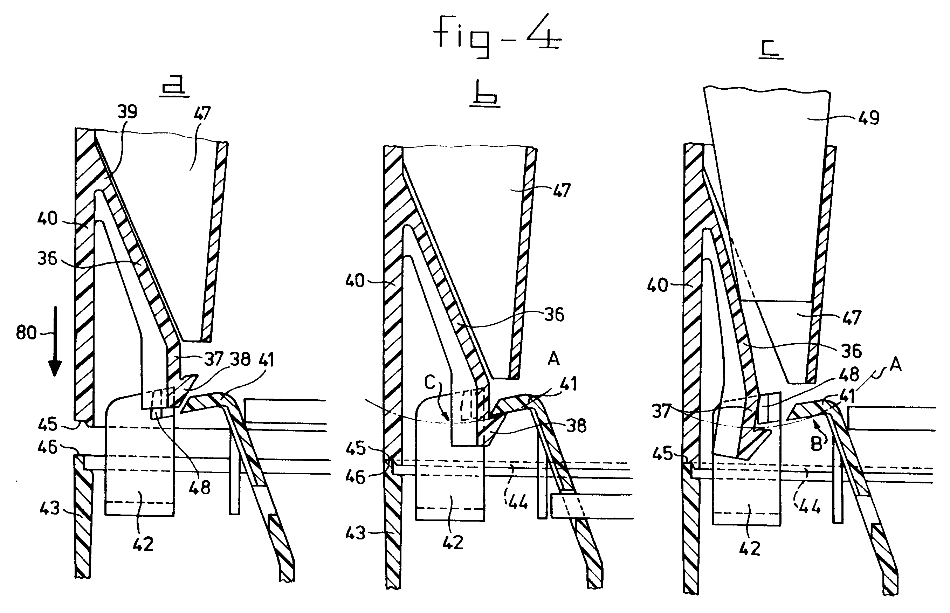

Figure 4 shows a snap connection system according to the invention corresponding to the embodiment shown in Figure 1, in which a latching hook 36 which differs in shape from the latching hook 1 is used. Instead of an extension 7 at the free end 3 of the latching hook 1 (Fig. 1), the latching hook 36 has a straight part 37 which extends adjoining an elevation 38 in the opposite direction to that of the fixed end 39 of the latching hook 36. The elevation 38 is approximately the same as the elevation 4 of the latching hook 1 shown in Figure 1.

The latching hook 36 is firmly fixed by its end 39 to a first part 40 of a unit to be connected, for example the cover of an electrical installation box. The latching lug 41 and the unlatching hook 42 correspond as regards design and positioning to the latching lug 8 and unlatching hook 12 shown in Figure 1 and are fixed to a second part 43 of the unit to be connected, for example the bottom part of an electrical installation box.

In this embodiment only one unlatching hook 42 is used, while the latching hook 36 is disposed at an angle relative to the connecting direction 80 of the two parts 40, 43, in order to ensure that tolerances in the dimensions of the parts 40, 43 to be connected and in the length and position of the latching hook 36 and the latching lug 41 can easily be accommodated.

As illustrated in Figures 4b and 4c, the free end of the latching hook 36, i.e. its elevation 38 for engagement on the latching lug 41, can make an arc-shaped travel A in the resilient direction of movement of the latching hook 36 . The latching lug 41 is positioned at a point B on said arc A beyond the point C at which the latching hook 36, i.e. its elevation 38, extends furthest viewed in the connecting direction 80 of the parts 40, 43 to be connected.

The engagement of the latching hook 36 and the latching lug 41 thereby takes place under (slight) mechanical stress, due to the fact that the elevation 38 of the latching hook tends to travel along the arc A in the direction of the point B, which produces a tractive force in the connecting direction 80, in order to hold the two parts 40, 43 firmly on each other without play. This is in order to ensure the impression of a mechanically good-quality connection and to provide the possibility of fitting a seal such as an O-ring or other packing between the edges 45, 46 of the parts 40, 43 to be connected. For these purposes, the latching lug 41 is also disposed at an angle relative to the connecting direction 80 in the direction towards the latching hook 36, with its plane essentially parallel to the plane of the latching hook 36 (see also Figure 1). The latching lug 41 is made slightly resilient transverse to the plane thereof.

Figure 4a shows the two parts 40, 43 detached. Moving, for example, the part 40 in the direction of the arrow 80 will cause the latching hook 36 to move with its elevation 38 past the latching lug 41 and assume the locking position shown in Figure 4b. Reference numeral 44 denotes the connecting interface of the parts 40, 43.

Via a tubular recess 47, the latching hook 36 can be moved from outside the part 40 using a screwdriver, or another piece of equipment specially developed for this purpose, out of the locking position into the unlocked position shown in Figure 4c, in which the unlatching hook 42 with its elevation 48, which corresponds to the elevation 16 in Figure 1, engages on the straight part 37 of the latching hook 36. From this unlocked position the part 40 can easily be detached from the part 43.

Unlike a straight, vertical arrangement of the latching hook, as in the case of the known snap connection system, the slanting arrangement has the advantage that no wrenching movement is necessary for taking the latching hook into the unlocked position, but it is sufficient to insert a wedge-shaped element, for example the element 49 shown in Figure 4c, straight into the tubular recess 47.

It will be clear that the positions of the latching hook 36 and the latching lug 41 with the unlatching hook 42 are interchangeable or can be in a mirror arrangement, depending on the area of application. From Figure 4a-b it is clear that the engaging parts of the latching hook 36, the unlatching hook 42 and the latching hook 41 are positioned near the interface 44.

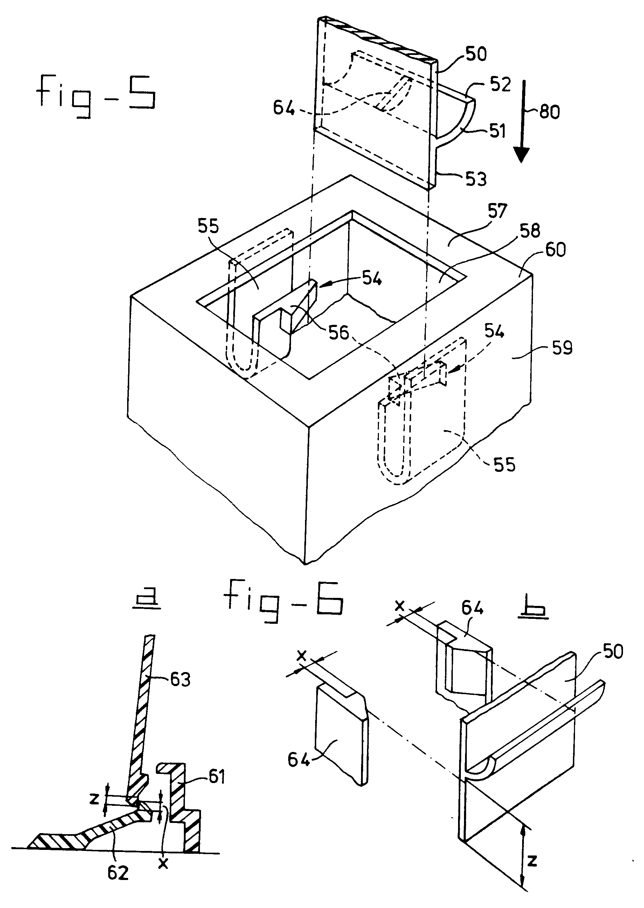

Figure 5 shows a snap connection system according to the invention corresponding in design to the embodiment shown in Figure 3, having a latching hook 50 which is bent over backwards near its free end forming an elevation 51, with a stop 52 and a reinforcing rib 64, and having an extension 53 for engagement on an unlatching hook 54 in the form of a lip-shaped sidepiece 55 which is bent over backwards and has an elevation 56. The boundary edge 57 of a recess 58 in an end face 60 of a tubular element 59 forms the latching lug.

In the locking position the stop 52 of the backward bent elevation 51 of the latching hook 50 engages on the boundary edge 57, while in the unlocked position the elevation 56 of the unlatching hook 54 engages on the extension 53 of the latching hook 50.

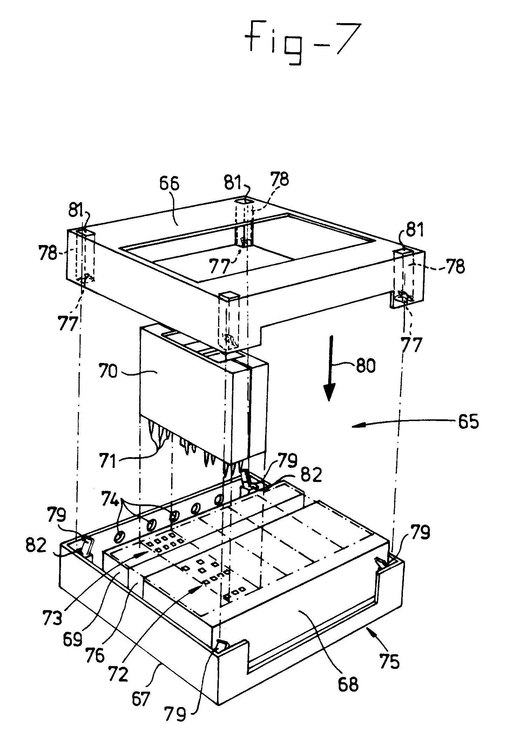

Figure 6 illustrates the main difference of the known snap connection system, shown in cross-section in Figure 6a, and the principle of the snap connection system according to the invention, shown in perspective in Figure 6b.

In the case of the known snap connection system, with latching hook 63, latching lug 61 and unlatching hook 62 disposed opposite the end face of the free end of the latching hook 63, the dimensions X and Z are closely related to each other. If Z is too long, the unlatching hook 62 forms a barrier for taking the latching hook 63 out of the locked position into the unlocked position (as shown). If, on the other hand, the distance Z or the distance X are too short, then the latching hook 63 cannot be latched by the unlatching hook 62 in the unlocked position. Apart from tolerances in the parts of the snap connection system itself, these length differences can also be due to tolerances of the parts of the unit to be connected. In the case of the snap connection system according to the invention, on the other hand, with latching hook 50 and unlatching hooks 54, the distances X and Z are independent of each other, resulting in the greater freedom of design described above.

The snap connection system according to the invention also makes it possible to place the unit without any problem in a corner against the wall. This is because in the case of the invention the locking is undone with a movement directed away from said wall.

Figure 7 shows an application of the snap connection system according to the invention in an electrical installation box 65, comprising a cover 66 and bottom part 67 in which wiring and safety equipment 68, 69 is installed. A connection can be produced between the elements 68 and 69 by means of a safety switch 70, using plug and socket connections 71, 72, 73. The bottom part 67 of the installation box 65 is provided with apertures 74, for the connection of cables of the electrical installation concerned and an aperture 75 for the connection of a supply line. A space 76 is also provided for the accommodation of signalling wiring and equipment. Such an installation box is known per se from Dutch Patent Application 9101631 (not a prior publication) in the name of applicants.

As a result of the relatively small dimensions of the snap connection system according to the invention, it can be sited at on all four of the corner points of the cover 66 and the bottom part 67, as illustrated.

The cover 66 is provided with latching lugs and unlatching hooks 77 disposed in or at an end of tubular holders 78, which are provided at another end with recesses 81 for receiving from the outside of the cover 66 a tool for unlocking the snap connection. The latching hooks 79 are fixed to the bottom part 67, at the end of tubular holders 82, and are only schematically shown. Preferably the embodiment according to the invention of the type discussed above in connection with Figures 3 or 5 can be used as a snap connection system. Providing the latching hook 79 inside the body 67 renders the system less prone to damaging such as caused by falling to the ground, compared to an embodiment in which the cover is provided with latching hooks, because the body is in most cases fixed to a wall.

It goes without saying that the invention is not restricted to use for the connection of a cover and bottom part, but can also be used for detachably fixing equipment in an installation box or in another suitable (electrical engineering) application field, nor is it restricted to the embodiments shown and discussed. The latching hook can for example, also be positioned transverse to the connecting direction 80 of the parts of the unit to be connected.

## Claims

1. Snap connection system for detachably connecting parts (40,43) of a unit, in particular for detachably fixing a plastic cover (66) on a plastic body (67) for use in electrical installations, comprising an elongated latching hook (1;21;36;50) which is resilient in one direction and is fixed to a first part (40) of the unit to be connected, an unlatching hook (12;31;42;54), which is resilient in one direction, and a latching lug (8;28;41;57), said unlatching hook (12;31;42;54) and latching lug (8;28;41;57) are fixed to a second part (43) of the unit to be connected, the latching hook (1;21;36;50) and the latching lug (8;28;41;57) being in a locking engagement when the parts (40,43) of the unit are connected, and said locking engagement can be unlocked and the latching hook (1;21;36;50) brought into engagement with the unlatching hook (12;31;42;54) by moving the latching hook (1;21;36:50) counter to its resilient direction of movement, in which unlocked state the latching hook (1;21;36;50) and the unlatching hook (12;31;42;54) engage until the parts (40,43) of the unit are detached, characterised in that the engaging parts of the latching lug (8;28;41;57), the unlatching hook (12;31;42;54) and the latching hook (1;21;36;50) are disposed near the connecting interface (44) of the first and second part (40,43) of the unit to be connected, wherein the unlatching hook (12;31;42;54) is disposed in such a way that it can engage on the latching hook (1;21;36;50) near its longitudinal edge (20).

2. Snap connection system according to Claim 1, wherein an unlatching hook (12;31;42;54) is disposed at each side of the latching lug (8;28;41;57), for engagement on a longitudinal edge (20) of the latching hook (1;21;36;50).

3. Snap connection system according to Claim 1 or 2, wherein each unlatching hook (12;54) extends in a direction essentially parallel to the latching hook (1;50).

4. Snap connection system according to Claim 3, wherein the latching hook (1;50) and each unlatching hook (12;54) extend parallel to the connecting direction (80) of the two parts of the unit.

5. Snap connection system according to Claim 1, 2, 3 or 4, wherein the latching hook (1;50) is lip-shaped, having one end fixed to the first part of the unit and a free end provided with an elevation (4;51) which slopes towards the fixed end of the latching hook (1;50) and passes into a stop (6;52) spaced apart from the face of the latching hook (1;50) for engagement on the latching lug (8;57).

6. Snap connection system according to Claim 5, wherein the free end of the lip-shaped latching hook (50) is bent over backwards in the direction of the fixed end thereof and forms the elevation (51) for engagement on the latching lug (57).

7. Snap connection system according to Claim 5 or 6, wherein the latching hook (1;21;36;50) is extended in a lip shape (7;23;37;53) near its free end, for engagement of an unlatching hook (12;31;48;54).

8. Snap connection system according to any of Claims 5 to 7, wherein each unlatching hook (12;54) is formed as a lip-shaped sidepiece (13;55) which extends with its plane transverse to the plane of the latching hook (1;50), which sidepiece (13;55) is provided with an elevation (16;56) which slopes in the unlocking direction of the latching hook (1;50), and which passes into a stop (18) for engagement on the free end of the latching hook (1;50), for holding the latching hook (1;50) at a distance from the latching lug (8;57) until the two parts of the unit are detached.

9. Snap connection system according to Claim 8, wherein the lip-shaped sidepiece (55) having one end fixed to the second part of the unit, and a free end bent over backwards towards the fixed end and provided with the elevation (56).

10. Snap connection system according to any of Claims 1 to 8, wherein the latching lug (8) and/or each unlatching hook (12;54) are/is disposed inside a tubular element (10;59) fixed to the second part of the unit.

11. Snap connection system according to any of Claims 1 to 10, wherein the unlatching hook is formed by a boundary edge (31) of a recess (27) for accommodating the latching hook (21), which recess forms part of the second part of the unit.

12. Snap connection system according to any of Claims 1 to 11, wherein the latching lug is formed by an edge (28;57) of a recess (27;58) for the accommodation of the latching hook (21;50), which recess (27;58) forms part of the second part of the unit.

13. Snap connection system according to Claim 11 or 12, wherein the recess (27;58) is formed in an end face (30;60) of a tubular element (29; 59) fixed to the second part of the unit.

14. Snap connection system according to any of Claims 1 to 13, wherein the latching hook (36) is disposed such that in its resilient direction of movement the part (38) thereof for engagement with the latching lug (41) can make an arc-shaped movement (A), the latching lug (41) being disposed such that in the locked position the latching hook (36) engages the latching lug (41) at a point (B) on said arc (A) beyond the point (C) at which the engaging part (38) of the latching hook (36) extends furthest.

15. Snap connection system according to Claim 14, wherein the latching hook (36) is disposed slanting over a distance relative to the connecting direction (80) of the two parts of the unit.

16. Snap connection system according to Claim 14 or 15, wherein part of the latching lug (8;41) for engagement on the latching hook (1;36) is disposed slanting relative to the connecting direction (80) of the unit in the direction towards the latching hook (1;36), such that the latching hook (1;36) and the latching lug (8;41) resiliently engage.

17. Housing (65) provided with a plastic cover (66) and a plastic body (67), in particular intended for use as a distribution box for an electrical installation, for the accommodation of safety and signalling equipment (68,69), provided with a snap connection system according to one or more of the preceding claims, wherein the body (67) is provided with latching hooks (79), and in which the cover (66) is provided with correspondingly positioned latching lugs and unlatching hooks (77) and recesses (78) formed in the cover (66) for moving the latching hooks (79) from the outside of the cover (66).

18. Distribution box (65) according to Claim 17, with an essentially rectangular cover (66) and body (67), in which a snap connection system (77-79) is disposed near each corner point of the cover (66) and body (67).

## Patentansprüche

1. Rastverbindungssystem zum lösbaren Verbinden von Teilen (40, 43) einer Einheit, insbesondere zum lösbaren Anbringen einer Plastikabdeckung (66) auf einem Plastikunterteil (67) zur Verwendung bei Elektroinstallationen, das einen länglichen Verriegelungshaken (1; 21; 36; 50), der in einer Richtung federnd ist und an einem ersten zu verbindenden Teil (40) der Einheit angebracht ist, einen Entriegelungshaken (12; 31; 42; 54), der in einer Richtung federnd ist, sowie einen Verriegelungsansatz (8; 28; 41; 57) umfaßt, wobei der Entriegelungshaken (12; 31; 42; 54) und der Verriegelungsansatz(8; 28; 41; 57) an einem zweiten zu verbindenden Teil (43) der Einheit angebracht sind und wobei der Verriegelungshaken (1; 21; 36; 50) und der Verriegelungsansatz (8; 28; 41; 57) sich in einem Verriegelungseingriff befinden, wenn die Teile (40, 43) der Einheit verbunden sind, und wobei der Verriegelungseingriff gelöst und der Verriegelungshaken (1; 21; 36; 50) mit dem Entriegelungshaken (12; 31; 42; 54) in Eingriff gebracht werden kann, indem der Verriegelungshaken (1; 21; 36; 50) entgegen seiner federnden Richtung bewegt wird, in welchem entriegelten Zustand sich der Verriegelungshaken (1; 21; 36; 50) und der Entriegelungshaken (12; 31; 42; 54) in Eingriff befinden, bis die Teile (40, 43) der Einheit voneinander gelöst sind, dadurch gekennzeichnet, daß die eingreifenden Teile des Verriegelungsansatzes (8; 28; 41; 57), des Entriegelungshakens (12; 31; 42; 54) und des Verriegelungshakens (1; 21; 36; 50) in der Nähe des Verbindungsabschnitts (44) des ersten und zweiten zu verbindenden Teiles (40, 43) der Einheit angeordnet sind, wobei der Entriegelungshaken (12; 31; 42; 54) derart angeordnet ist, daß er an dem Verriegelungshaken (1; 21; 36; 50) in der Nähe dessen Längskante (20) eingreifen kann.

2. Rastverbindungssystem nach Anspruch 1, wobei ein Entriegelungshaken (12; 31; 42; 54) an jeder Seite des Verriegelungsansatz (8; 28; 41; 57) zum Eingreifen an einer Längskante (20) des Verriegelungshakens (1; 21; 36; 50) angeordnet ist.

3. Rastverbindungssystem nach Anspruch 1 oder 2, wobei jeder Entriegelungshaken (12; 54) sich im wesentlichen in einer zu dem Verriegelungshaken (1; 50) parallelen Richtung erstreckt.

4. Rastverbindungssystem nach Anspruch 3, wobei der Verriegelungshaken (1; 50) und jeder Entriegelungshaken (12; 54) sich parallel zu der Verbindungsrichtung (80) der beiden Teile der Einheit erstrecken.

5. Rastverbindungssystem nach Anspruch 1, 2, 3 oder 4, wobei der Verriegelungshaken (1; 50) lippenförmig ist, wobei ein erstes Ende an dem ersten Teil der Einheit befestigt ist und ein freies Ende mit einer Erhöhung (4; 51) versehen ist, die zum Eingriff mit dem Verriegelungsansatz (8; 57) zu dem befestigten Ende des Verriegelungshakens (1; 50) hin ansteigt und in einen zu der Stirnfläche des Verriegelungshakens (1; 50) beabstandeten Anschlag übergeht.

6. Rastverbindungssystem nach Anspruch 5, wobei das freie Ende des lippenförmgen Verriegelungshakens (50) in die Richtung dessen befestigten Endes zurückgebogen ist und die Erhöhung (51) zum Eingriff mit dem Verriegelungsansatz (57) darstellt.

7. Rastverbindungssystem nach Anspruch 5 oder 6, wobei der Verriegelungshaken (1; 21; 36; 50) zum Eingriff mit einem Entriegelungshaken (12; 31; 48; 54) in der Nähe seines freien Endes in eine Lippenform (7; 23; 37; 53) erweitert ist.

8. Rastverbindungssystem nach einem der Ansprüche 5 bis 7, wobei jeder Entriegelungshaken (12; 54) als lippenförmiges Seitenstück (13; 55) ausgebildet ist, das sich mit seiner Ebene quer zu der Ebene des Verriegelungshakens (1; 50) erstreckt, und das mit einer Erhöhung (16; 56) versehen ist, die in der Entriegelungsrichtung des Verriegelungshakens (1; 50) ansteigt und die in einen Anschlag (18) zum Eingriff an dem freien Ende des Verriegelungshakens (1; 50) übergeht, um den Verriegelungshaken (1; 50) in einem Abstand von dem Verriegelungsansatz (8; 57) zu halten, bis die beiden Teile der Einheit voneinander gelöst sind.

9. Rastverbindungssystem nach Anspruch 8, wobei das lippenförmige Seitenstück (55) mit einem Ende an dem zweiten Teil der Einheit befestigt ist und ein freies Ende zu dem befestigten Ende hin zurückgebogen und mit einer Erhöhung versehen ist.

10. Rastverbindungssystem nach einem der Ansprüche 1 bis 8, wobei der Verriegelungsschuh (8) und/oder jeder Entriegelungshaken (12; 54) in einem rohrförmigen Element (10; 59) angeordnet ist/sind, das an dem zweiten Teil der Einheit angebracht ist.

11. Rastverbindungssystem nach einem der Ansprüche 1 bis 10, wobei der Entriegelungshaken durch eine Begrenzungskante (31) einer Aussparung (27) zur Aufnahme des Verriegelungshakens (21; 50) gebildet wird, wobei die Aussparung einen Teil des zweiten Teils der Einheit bildet.

12. Rastverbindungssystem nach einem der Ansprüche 1 bis 11, wobei der Verriegelungsansatz durch eine Kante (28; 57) einer Aussparung (27; 58) zur Aufnahme des Verriegelungshakens (21; 50) gebildet wird, wobei die Aussparung (27; 58) einen Teil des zweiten Teils der Einheit bildet.

13. Rastverbindungssystem nach Anspruch 11 oder 12, wobei die Aussparung (27; 58) in einer Stirnfläche (30; 60) eines an dem zweiten Teil der Einheit angebrachten rohrförmigen Elements (29; 59) gebildet ist.

14. Rastverbindungssystem nach einem der Ansprüche 1 bis 13, wobei der Verriegelungshaken (36) derart angeordnet ist, daß sein Abschnitt (38) zum Eingriff mit dem Verriegelungsansatz (41) in seiner federnden Bewegungsrichtung eine bogenförmige Bewegung (A) vollführen kann, daß der Verriegelungsschuh (41) derart angeordnet ist, und daß der Verriegelungshaken (36) in der Verriegelungsstellung an einem Punkt (B) auf dem Bogen (A) mit dem Verriegelungsansatz (41) in Eingriff kommt, der jenseits des Punktes (C) liegt, bis zu dem der eingreifende Abschnitt (38) des Verriegelungshakens (36) maximal reicht.

15. Rastverbindungssystem nach Anspruch 14, wobei der Verriegelungshaken (36) in Bezug auf die Verbindungsrichtung der beiden Teile der Einheit streckenweise schräg angeordnet ist.

16. Rastverbindungssystem nach Anspruch 14 oder 15, dadurch wobei ein Abschnitt des Verriegelungsansatzes (8; 41) zum Eingriff mit dem Verriegelungshaken (1; 36) in Bezug auf die Verbindungsrichtung der Einheit zu dem Verriegelungshaken (1; 36) hin schräg angeordnet ist, so daß der Verriegelungshaken (1; 36) und der Verriegelungsansatz (8; 41) federnd ineinandergreifen.

17. Gehäuse (65) mit einer Plastikabdeckung (66) und einem Plastikunterteil (67), insbesondere zur Verwendung als Verteilerkasten für Elektroinstallationen, zur Aufnahme von Sicherheits- und Signalisierungsausrüstung (68, 69), das mit einem Rastverbindungssystem nach einem oder mehreren der vorhergehenden Ansprüche versehen ist, wobei das Unterteil (67) mit Verriegelungshaken (79) versehen ist und daß die Abdeckung (66) mit entsprechend angeordneten Verriegelungsansätzen und Entriegelungshaken (77) sowie in der Abdeckung ausgebildeten Aussparungen (78) zum Bewegen der Verriegelungshaken (79) von außerhalb der Abdeckung versehen ist.

18. Verteilerkasten (65) nach Anspruch 17, mit einer im wesentlichen rechteckigen Abdeckung (66) und einem im wesentlichen rechteckigen Unterteil (67), wobei ein Rastverbindungssystem (77-79) in der Nähe jeder Ecke der Abdekkung (66) und des Unterteils (67) angeordnet ist.

## Revendications

1. Système de connexion à encliquetage pour connecter de manière détachable des parties (40, 43) d'une unité, en particulier pour fixer de manière détachable un couvercle (66) en matière plastique sur un corps (67) en matière plastique pour servir dans des installations électriques, comprenant un crochet de verrouillage allongé (1 ; 21 ; 36 ; 50) qui est élastique dans un sens et qui est fixé à une première partie (40) de l'unité à connecter, un crochet de déverrouillage (12 ; 31 ; 42 ; 54), qui est élastique dans un sens, et un talon de verrouillage (8 ; 28 ; 41 ; 57), les dits crochet de déverrouillage (12 ; 31 ; 42 ; 54) et talon de verrouillage (8 ; 28 ; 41 ; 57) étant fixés à une seconde partie (43) de l'unité à connecter, le crochet de verrouillage (1 ; 21 ; 36 ; 50) et le talon de verrouillage (8 ; 28 ; 41 ; 57) étant en prise d'enclenchement lorsque les parties (40, 43) de l'unité sont connectées, et la dite prise d'enclenchement pouvant être désenclenchée et le crochet de verrouillage (1 ; 21 ; 36 ; 50) pouvant être amené en prise avec le crochet de déverrouillage (12 ; 31 ; 42 ; 54) par déplacement du crochet de verrouillage (1 ; 21 ; 36 ; 50) à l'opposé de son sens élastique de déplacement, état désenclenché dans lequel le crochet de verrouillage (1 ; 21 ; 36 ; 50) et le crochet de déverrouillage (12 ; 31 ; 42 ; 54) sont en prise jusqu'à ce que les parties (40, 43) de l'unité soient séparées, caractérisé en ce que les parties en prise du talon de verrouillage (8 ; 28 ; 41 ; 57), du crochet de déverrouillage (12 ; 31 ; 42 ; 54) et du crochet de verrouillage (1 ; 21 ; 36 ; 50) sont disposées au voisinage de l'interface de connexion (44) de la première et de la seconde partie (40, 43) de l'unité à connecter, le crochet de déverrouillage (12 ; 31 ; 42 ; 54) étant disposé d'une manière telle qu'il peut venir en prise sur le crochet de verrouillage (1 ; 21 ; 36 ; 50) au voisinage de son bord longitudinal (20).

2. Système de connexion à encliquetage selon la revendication 1, dans lequel un crochet de déverrouillage (12 ; 31 ; 42 ; 54) est disposé de chaque côté du talon de verrouillage (8 ; 28 ; 41 ; 57), pour venue en prise sur un bord longitudinal (20) du crochet de verrouillage (1 ; 21 ; 36 ; 50).

3. Système de connexion à encliquetage selon la revendication 1 ou 2, dans lequel chaque crochet de déverrouillage (12 ; 54) s'étend dans une direction essentiellement parallèle au crochet de verrouillage (1 ; 50).

4. Système de connexion à encliquetage selon la revendication 3, dans lequel le crochet de verrouillage (1 ; 50) et chaque crochet de déverrouillage (12 ; 54) s'étendent parallèlement au sens de connexion (80) des deux parties de l'unité.

5. Système de connexion à encliquetage selon la revendication 1, 2, 3 ou 4, dans lequel le crochet de verrouillage (1 ; 50) a la forme d'une lèvre, ayant une extrémité fixée à la première partie de l'unité et une extrémité libre munie d'une saillie (4 ; 51) qui est en pente vers l'extrémité fixe du crochet de verrouillage (1 ; 50) et qui se transforme en une butée (6 ; 52) écartée de la face du crochet de verrouillage (1 ; 50) pour venue en prise sur le talon de verrouillage (8 ; 57).

6. Système de connexion à encliquetage selon la revendication 5, dans lequel l'extrémité libre du crochet de verrouillage en forme de lèvre (50) est recourbée vers l'arrière en direction de l'extrémité fixe de celui-ci et forme la saillie (51) pour venue en prise sur le talon de verrouillage (57).

7. Système de connexion à encliquetage selon la revendication 5 ou 6, dans lequel le crochet de verrouillage (1 ; 21 ; 36 ; 50) est prolongé en une forme de lèvre (7 ; 23 ; 37 ; 53) au voisinage de son extrémité libre, pour venue en prise d'un crochet de déverrouillage (12 ; 31 ; 48 ; 54).

8. Système de connexion à encliquetage selon l'une quelconque des revendications 5 à 7, dans lequel chaque crochet de déverrouillage (12 ; 54) est réalisé en tant que pièce latérale en forme de lèvre (13 ; 55) dont le plan s'étend transversalement au plan du crochet de verrouillage (1 ; 50), laquelle pièce latérale (13 ; 55) est munie d'une proéminence (16 ; 56) qui est en pente dans le sens de déverrouillage du crochet de verrouillage (1 ; 50), et qui se transforme en butée (18) pour venue en prise sur l'extrémité libre du crochet de verrouillage (1 ; 50), pour maintenir le crochet de verrouillage (1 ; 50) à distance du talon de verrouillage (8 ; 57) jusqu'à ce que les deux parties de l'unité soient séparées.

9. Système de connexion à encliquetage selon la revendication 8, dans lequel la pièce latérale en forme de lèvre (55) a une extrémité fixée à la seconde partie de l'unité, et une extrémité libre repliée en arrière vers l'extrémité fixe et munie d'une proéminence (56).

10. Système de connexion à encliquetage selon l'une quelconque des revendications 1 à 8, dans lequel le talon de verrouillage (8) et/ou chaque crochet de déverrouillage (12 ; 54) sont/est disposé(s) à l'intérieur d'un élément tubulaire (10 ; 59) fixé à la seconde partie de l'unité.

11. Système de connexion à encliquetage selon l'une quelconque des revendications 1 à 10, dans lequel le crochet de déverrouillage est formé par un bord limite (31) d'un évidement (27) pour recevoir le crochet de verrouillage (21), lequel évidement constitue une partie de la seconde partie de l'unité.

12. Système de connexion à encliquetage selon l'une quelconque des revendications 1 à 11, dans lequel le talon de verrouillage est formé par un bord (28 ; 57) d'un évidement (27 ; 58) pour le logement du crochet de verrouillage (21 ; 50), lequel évidement (27 ; 58) constitue une partie de la seconde partie de l'unité.

13. Système de connexion à encliquetage selon la revendication 11 ou 12, dans lequel l'évidement (27 ; 58) est réalisé dans une face d'extrémité (30 ; 60) d'un élément tubulaire (29 ; 59) fixé à la seconde partie de l'unité.

14. Système de connexion à encliquetage selon l'une quelconque des revendications 1 à 13, dans lequel le crochet de verrouillage (36) est disposé de telle sorte que dans son sens élastique de déplacement la partie (38) de celui-ci pour venue en prise avec le talon de verrouillage (41) peut effectuer un déplacement en forme d'arc (A), le talon de verrouillage (41) étant disposé de telle manière que dans la position enclenchée le crochet de verrouillage (36) soit en prise avec le talon de verrouillage (41) en un point (B) situé sur le dit arc (A) au-delà du point (C) où la partie de prise (38) du crochet de verrouillage (36) s'étend le plus loin.

15. Système de connexion à encliquetage selon la revendication 14, dans lequel le crochet de verrouillage (36) est disposé en oblique suivant une certaine distance par rapport au sens de connexion (80) des deux parties de l'unité.

16. Système de connexion à encliquetage selon la revendication 14 ou 15, dans lequel la partie du talon de verrouillage (8 ; 41) pour venue en prise sur le crochet de verrouillage (1 ; 36) est disposée en oblique par rapport au sens de connexion (80) de l'unité en direction du crochet de verrouillage (1 ; 36), de telle sorte que le crochet de verrouillage (1 ; 36) et le talon de verrouillage (8 ; 41) viennent en prise élastiquement.

17. Boîtier (65) muni d'un couvercle en matière plastique (66) et d'un corps en matière plastique (67) en particulier destiné à servir comme boîte de distribution pour une installation électrique, pour le logement d'équipements de signalisation et de sécurité (68, 69), muni d'un système de connexion à encliquetage selon l'une ou plusieurs des revendications précédentes, dans lequel le corps (67) est muni de crochets de verrouillage (79), et dans lequel le couvercle (66) est muni de talons de verrouillage positionnés de manière correspondante et de crochets de déverrouillage (77) et d'évidements (78) réalisés dans le couvercle (66) pour déplacer les crochets de verrouillage (79) depuis l'extérieur du couvercle (66).

18. Boîte de distribution (65) selon la revendication 17, ayant un couvercle (66) et un corps (67) essentiellement rectangulaires, dans laquelle un système de connexion à encliquetage (77-79) est disposé au voisinage de chaque coin du couvercle (66) et du corps (67).
